# EUROPEAN PATENT APPLICATION

(11) **EP 1 717 723 A1**
(43) Date of publication of application: **02.11.2006**
(21) Application number: 05009410.1
(22) Date of filing: 29.04.2005
(51) Int. Cl.: G06F 21/00

(54) **Improved virtual machine or hardware processor for IC-card portable electronic devices**

(71) Applicant: ST Incard S.r.l., 20041 Agrate Brianza (Milano) (IT)
(72) Inventor: Varone, Francesco, 81041 Bellona (Caserta) (IT); Veneroso, Amadeo, 80056 Ercolano (Napoli) (IT); Vastano, Pasquale, 81055 S. Maria Capua Vetere (Caserta) (IT)
(74) Representative: Ferrari, Barbara

(57) **Abstract**

A Virtual machine or hardware processor 10 for IC-Card portable electronic devices including a non volatile memory unit 1 a Remote Decryption Unit 2 and associated means for storing executable program in crypted format 7 inside the non volatile memory 1 and for executing them. An IC Card 19 stores a licence Key 8 to crypt and decrypt the executable program through an IC Card Interface 20. The IC Card Interface 20 extracts and crypts only the operands 5 of said plain executable program 4 into crops 6 not to damage the performance. The Remote Decryption Unit 2 detects if an instruction contains crops 6 and queries a decryption 11 to the IC Card Interface 20. The IC Card Interface 20 decrypts the crops 6 and re-crypts the just being decrypted crops (6) into obscured operands 18, through a dynamic obscuration key 17.

## Description

### Field of application

The present invention relates, in its more general aspect, to a virtual machine or hardware processor including a non volatile memory unit particularly, but not exclusively, indicated for IC-Card portable electronic devices like digital assistant, smart phones and similar devices.

In particular the present invention relates to a portable electronic system including an IC-Card; an electronic device comprising a virtual machine or a hardware processor and a non volatile memory unit in the electronic device .

### Background of the invention

IC-Card portable electronic devices like digital assistant, smart phones and similar devices contain hardware components to store and execute executable program.

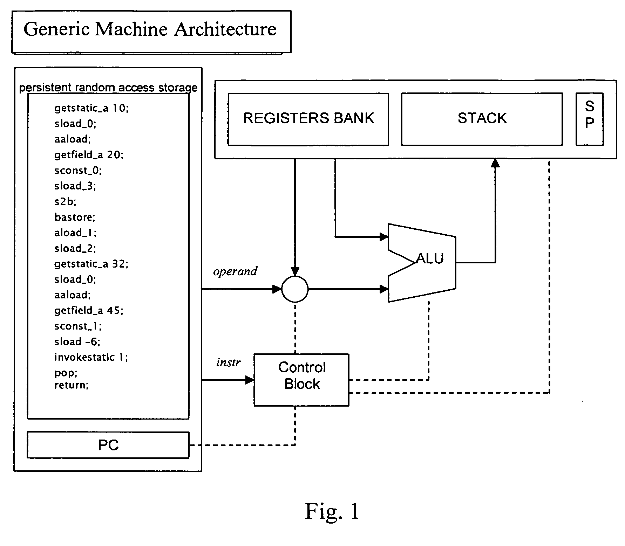

In particular a generic hardware architecture is constituted by two main blocks: the first one comprising a non volatile memory unit and a program counter and the second one comprising data memory, registers and stack, as schematically shown in figure 1.

IC-Card portable electronic devices are oftentimes based on a virtual machine architecture. The virtual machine architecture is implemented on the top of a hardware architecture and it is similar to the one described above for a generic hardware architecture. Few difference can be noted: the virtual machine architecture is stack based, so that it has no general purpose registers. Anyway, as stated for a generic hardware architecture, also the virtual machine architecture stores executable program inside the non volatile memory unit.

The virtual machine architecture provides a layer of abstraction between the compiled program and the underlying hardware architecture and operating system, playing a central role in portability.

Non volatile memory unit, not depending on the machine architecture, are readable connecting the IC-Card portable electronic devices to a PC through specific interface or using diagnostic software released by device manufacturer, generally known as software drivers.

Software drivers can be also downloaded from manufacturer support internet site and, in the worst case, they can be copied and simulated by hackers. In this respect, non volatile memory unit cannot be considered a secure support for storing the plain version of an executable program.

As a matter of fact, executable programs are stored inside the non volatile memory unit in non crypted way because they must be executed.

Executable programs so stored in a plain format are in danger because, potentially, they can be copied and reproduced.

Software providers may want to transmit or download executable programs in secure manner so to prevent the executable programs to be stolen in the transmission channel or across device interface.

The technical problem underlying the present invention is that of providing so said executable programs to be stored in a secure manner, at same time without interfering with their easy execution or the portability of the machine architecture and the performance during execution thus overcoming the drawbacks cited with reference to the prior art.

### Summary of the invention

The solution idea of the present invention is based on a virtual machine or hardware processor to protect executable programs stored inside a non volatile memory unit through the encryption of the executable program to be executed as well as its run-time decryption.

According to such a solution idea a first embodiment of the present invention relates to a virtual machine or hardware processor for IC-Card portable electronic devices as defined in claim 1.

The invention further relates to a portable electronic device including an IC-Card as defined in claim 16.

Further characteristics and the advantages of the machine architecture and of the encryption method according to the present invention will be apparent from the following description of an embodiment thereof, made with reference to the annexed drawings, given for indicative and nonlimiting purpose.

### Brief description of the drawings

- Figure 1 shows a simplified and schematic representation of a generic machine architecture, according to the prior art.
- Figure 2 shows, in a simplified and schematic representation, a crypted register machine architecture including a Remote Decription Unit, according to the present invention.
- Figure 3 shows a simplified and schematic representation of the executable program encryption.
- Figure 4 represents the IC Card Interface decryption of crops (through licence key) and the subsequent encryption into obscured operands (through a dynamic key).
- Figure 5 shows schematically the obscuration of crops using the Diffie-Hellman key exchange protocol, according to the present invention.
- Figure 6 lists the six step performed by the security system according to the present invention.
- Figure 7 shows an hardware version of the invention.
- Figure 8 shows some alternate configurations of the described architecture. Relevant components with respect to figure 2 are not greyed.
- Figure 9 shows some alternate configurations of the described architecture. Relevant components with respect to figure 2 are not greyed.
- Figure 10 shows some alternate configurations of the described architecture. Relevant components with respect to figure 2 are not greyed.
- Figure 11 schematically represents the collection of many operands to be encrypted in one-shot.
- Figure 12 represents an example of caching operands through an obscuration operands LOOK UP CACHE..

### Detailed description

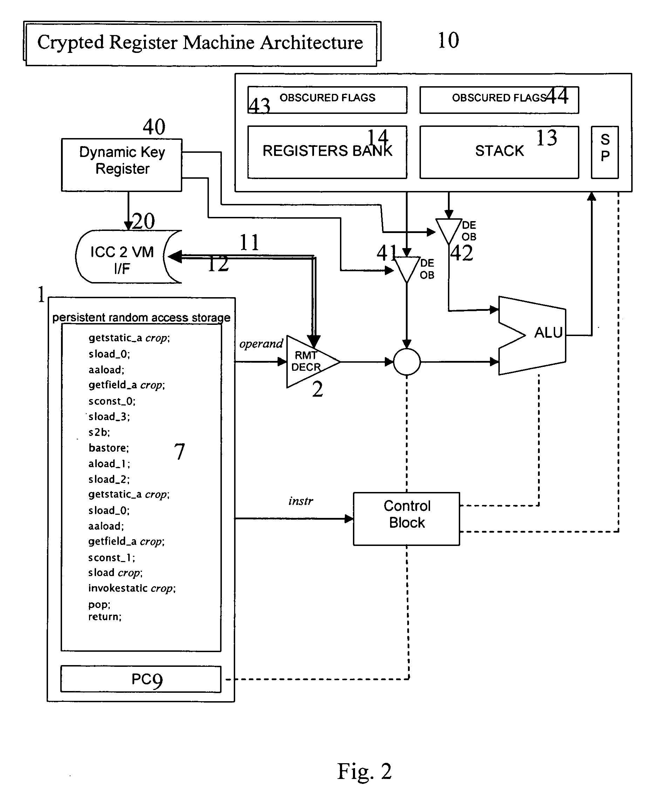

With reference to figure 2, a virtual machine or hardware processor for IC-Card portable electronic devices is represented with numeral reference 10. In particular the virtual machine or hardware processor includes a non volatile memory unit 1, a program counter 9, a stack 13 and a register bank 14. In figure 2 is also represented an IC Card Interface 20, between the IC Card 19 and the virtual machine or hardware processor 10.

Advantageously according to the present invention, the virtual machine or hardware processor 10 including the non volatile memory unit 1 is characterized by comprising a Remote Decryption Unit 2 and associated means for storing executable program in crypted format 7 in said non volatile memory unit 1 and for executing said executable program in crypted format 7.

Said associated means comprise an IC Card 19 storing a licence Key 8 and an IC Card Interface 20 for decrypting the executable program in crypted format 7 into plain executable program 4 through said licence Key 8.

The IC Card Interface 20 decrypts only the operands 6 of executable program in crypted format 7 into decrypted operands 5.

The Remote Decryption Unit 2 detects if an instruction contains crypted operands crops 6 and queries a decryption 11 to the IC Card Interface 20.

The IC Card Interface 20 decrypts crops 6 through said licence key 8.

A dynamic obscuration key 17 is generated periodically by the virtual machine or hardware processor 10, for example during the start up of every communication session between the IC-card 19 and the Virtual machine or hardware processor 10.

The obscuration key 17 is stored both in the IC Card 19 and in virtual machine or hardware processor 10 and used to crypt the just being decrypted crops 6 into obscured operands 18. The IC Card Interface 20 returns the obscured operands 18 to the Remote Decryption Unit 2.

With reference to Figure 2, a virtual machine or hardware processor 10 according to the present invention is schematically represented with 10.

In particular the non volatile memory unit is indicated with numeral reference 1, the program counter with 9, the register bank with 14 and the stack with 13.

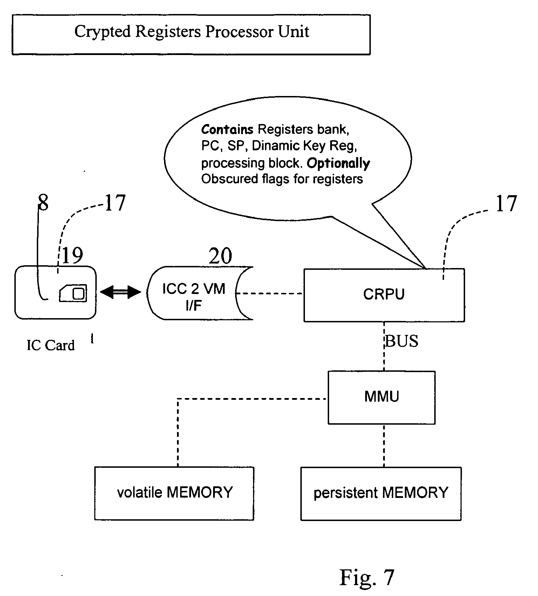

In the same figure 2 is also represented the IC Card Interface 20, interfacing the IC Card 19 with the virtual machine or hardware processor 10; a licence key 8 is stored inside said IC Card 19, as shown in Figure 7.

More in particular the Remote Decryption Unit indicated with 2 is connected with the non volatile memory unit 1 and the IC Card Interface 20.

A Dynamic Key Register block is represented with 40 and connected with two de-obscurator units 41 and 42 and with IC Card Interface 20.

The register bank 14 and the stack 13 are associated with corresponding obscuration flag 43 and 44.

According to the present invention an executable program in crypted format 7 is stored inside said non volatile memory unit 1; the executable program in crypted format 7 is obtained from a crypting phase of a plain executable program 4.

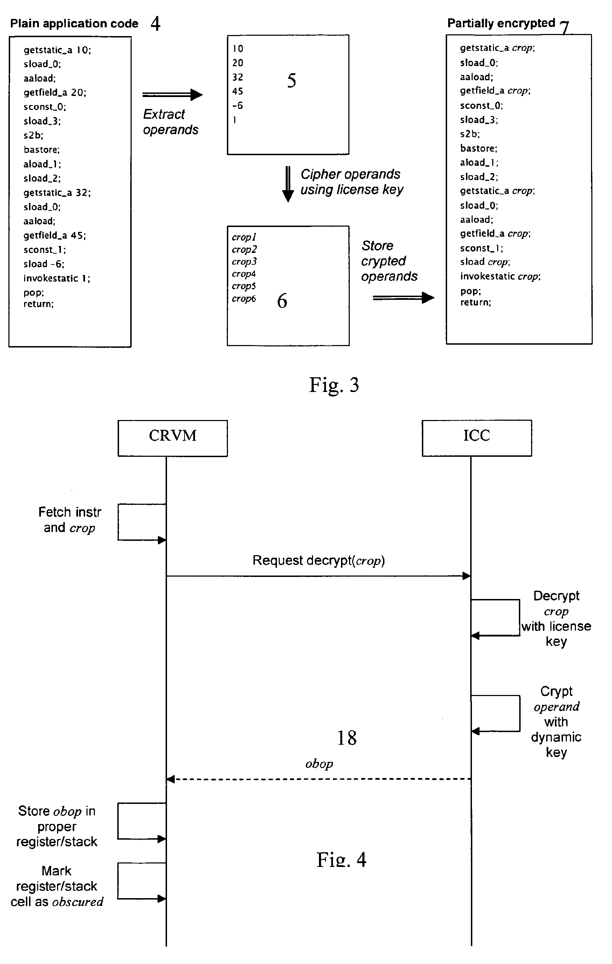

More in particularly, the whole plain executable program 4 is not totally crypted: the operands 5 are recognised and extracted from the plain executable program 4 as shown in figure 3. The way operands 5 are crypted into crypted operands crops 6 to produce executable program in crypted format 7, is not relevant for the invention and we can assume that a generic server 90 performs this operation through a licence key 8.

For a better understanding, the encryption process is schematically shown in figure 3: the extracted operands 5 are transformed into crypted operands crops 6. Said crypted operands crops 6 are re-aggregated with the remaining code belonging to plain executable program 4 into a partially crypted executable program 7. The partially crypted executable program 7 is finally stored inside said non volatile memory unit 1.

Advantageously, the strategy of crypting operands only, allows to not damage the performance of the machine architecture because operands represent a small although vital part of executable code. An estimate on a JavaCard assembly code (like the one shown in figure 2), where the values 0, 1, 2, 3 are often implicit in the operative code, says that explicit operands represent about 10% of the whole code.

The same licence key 8 used from the generic server 90 is stored on the IC-Card 19; it constitutes a secure support for the point of view of the executable code, since it can be transferred from and to the device with no security problem. More in general an IC-Card could also execute many kinds of application but it is much slower than modern smart-phones or other similar devices and for that reason the application must reside in device to be efficiently executed.

The executable program in crypted format 7, so stored in non volatile memory unit 1, must be executed from the virtual machine or hardware processor 1. According to the present invention, when an instruction is fetched from the non volatile memory unit 1, the Remote Decryption Unit 2 is responsible to detect if the instruction contains a crypted operand crop 6 or not. In the first case, the Remote Decryption Unit 2 queries a decryption to the IC Card Interface 20, as schematically shown with 11 in figure 2.

The IC Card Interface 20 decrypts the crypted operand crop 6 through the licence key 8 stored inside the IC Card 19. The IC Card Interface 20, before returning the values of the operand, perform another encryption based on a dynamic obscuration key 17.

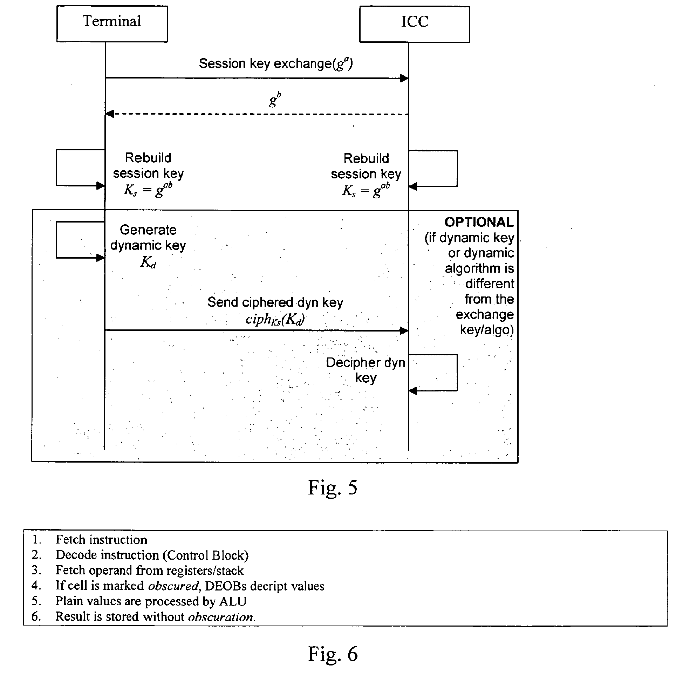

The dynamic obscuration key 17 is generated by the virtual machine or hardware processor 10, usually when execution starts, and sent to the IC-Card 19 when needed, for example using the protocol shown in figure 5 (this protocol follow, for instance, the Diffie-Hellman key exchange protocol). As shown in figure 2, the dynamic obscuration key 17 is stored inside a dynamic key register unit 40.

As an alternative, the complexity of the algorithm for generating the dynamic obscuration key 17 may be choosen according to the need of the subsequent obscuration phases.

An additional obscuration is performed to make safer the executable program also during run time. Anyway the obscuration algorithm is preferred to be much weaker than the one used to generate crypted operands crops 6, for performance reasons. Crypting algorithms quality shall be balanced according to IC-card 19 and channel speed. Data to be crypted, however, are dynamic and their sensitivity is low so to improve intrinsic quality of algorithms. Besides, potential weakness of obscuration algorithm is balanced by randomness of the dynamic obscuration key.

As explained above, the IC Card Interface 20 crypts the just being decrypted crops 6 into obscured operands 18 through said dynamic obscuration key 17 and then returns the obscured operand 18 to the Remote Decryption Unit 2.

When the obscured operand 18 is returned to the virtual machine or hardware processor 10, it is stored inside stack 13 or in register bank 14, and the obscurator flag 43 or 44, associated respectively to the stack 13 or register bank 14, is marked to remember that the value of the operand isn't plain.

Since registers are obscured, a potential access to a volatile memory doesn't allow an immediate recognition of the real value, even during run time. Obscuration is not performed on aggregate data but on elementary cell, at register level, so that even if the plain value is grabbed, it's difficult to understand its meaning in relevant context.

When the execution of the instruction needs the plain value of the obscured operand 18, the plain value is obtained through the de-obscurator unit 41 or 42 , according respectively to the fact that the obscurator flag 43 or 44 has been marked.

To optimise the performance of the virtual machine or hardware processor many operands 5 can be collected and crypted in a single encryption pass. This should enhance quality of encryption and should reduce the occurrence of the transfers between virtual machine or hardware processor 10 and IC-card 19.

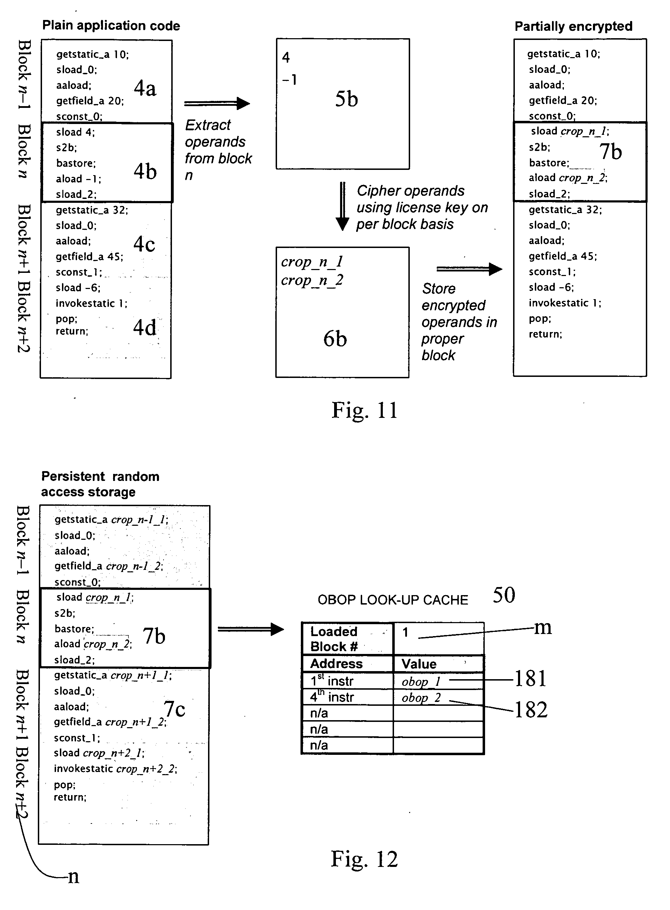

As shown in figure 11, a collection of operands 5 shall be made in a predetermined way, that can be repeated in the same way both by the generic server 90 that encrypts the plain executable program 4 and by the system composed of the virtual machine or hardware processor 10 and IC-card 19, that decrypts the executable program in crypted format 7.

For example, the plain executable program 4 can be divided in some blocks 4a, 4b, 4c, 4d of the same size; all operands 5a, 5b, 5c, 5d are extracted by the corresponding blocks and encrypted with the license key 8 into crypted operands crops 6a, 6b, 6c, 6d. After that, they can be re-aggregated in corresponding blocks of the executable program in crypted format 7a, 7b, 7c, 7d.

As shown in figure 12, when the virtual machine or hardware processor 10 tries to execute a block 7b, it performs a static look-ahead (i.e. not based on logic flow but on the address) of the code in the block, collects and aggregate crypted operands crops and send them to the IC-card 19. Data are then returned by the IC-card 19 in obscured form 181, 182. They are stored by the virtual machine or hardware processor 10 in a look-up table 50, each obscured operand 181, 182 associated to the address of the instruction it belongs to (1^{th}, 4^{th}).

In this manner the virtual machine or hardware processor 10 can then locate the proper obscured operand 18, for each instruction i^{th}, during the actual code execution.

When execution continues in a new block 7c, the look-up table 50 is erased and filled in with obscured operands from the new block 7c. The virtual machine or hardware processor 10 knows if the look-up table 50 contains obscured operands 18 that belongs to the current block 7c because it compares the current block number "n" to the number reference "m" of the look up table 50.

The basic mechanism shown in figure 12, for example the address in the first column of the look-up table 50 can be implicit, multiple look-up tables 50 can be used, to store simultaneously the obscured operands 18 that belong to more blocks and so on.

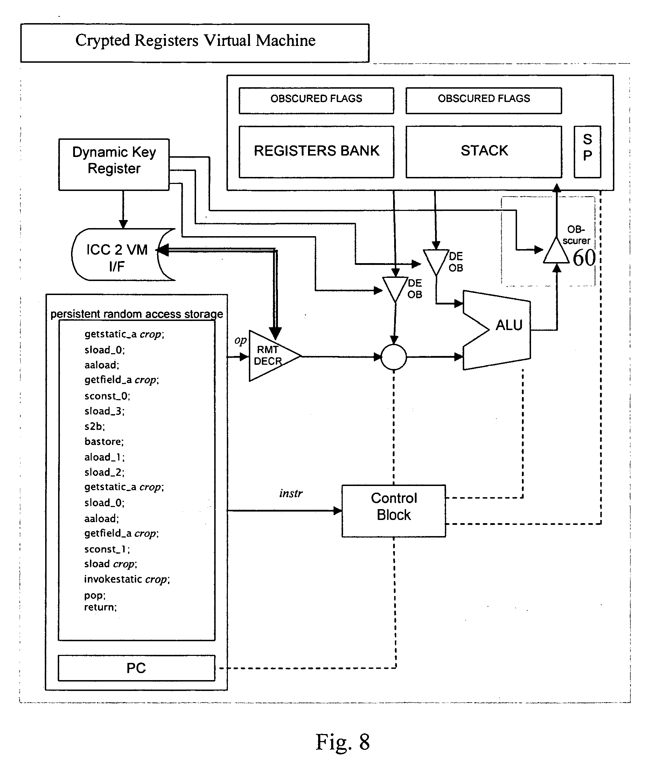

Said machine architecture is eligible to be further specified: in figure 8, 9 and 10 some alternative configurations are schematically shown.

With respect to figure 2, in figure 8 an obscurer block 60 is inserted on the line that carries results from computational unit (ALU) to registers14 or stack13 . This should be useful if the access to registers 14 and/or stack 13 by unauthorized entities is believed probably. In figure 2 in fact, only crypted operands crops 6, directly loaded from executable program in crypted format 7, can be stored in obscured manner in the registries 14 or stack 13.

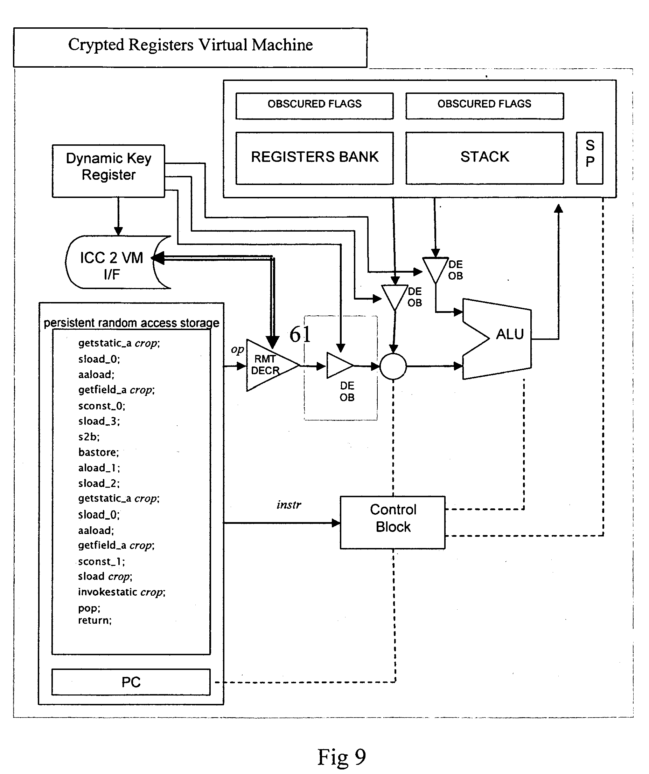

In figure 9 a de-obscurer 61 is needed at output of Remote Decryption Unit 2 if operand of instructions different from "load" (e.g. "add" operands and other arithmetic instructions) are allowed to be encrypted. In fact, both such operands and data retrieved from registers 14 or stack 13 shall be in plain form, before feeding the ALU.

Other versions of possible architectures according to the invention can be obtained by combining the structures shown in figure 3, 8, 9.

It is worth to note that the figure 9 is related to a programming model that provide instruction with none or a single operand. Anyway the invention can be extended to programming models where instructions with more than one operand are admitted. Multiple operands can be fetched and processed in a variety of manners (serially, in parallel, by microprograms), but the case is out of the scope of this document.

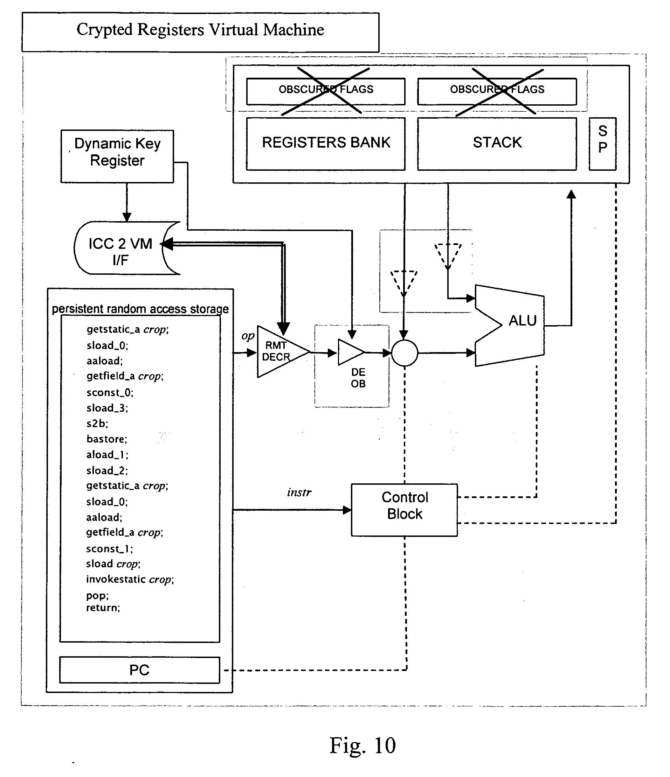

If registers bank 14 and stack 13 are believed to have a high degree of protection, thanks to intrinsic architecture properties (in particular in a hardware machine), the overall architecture can be simplified by removing Obscured flags 43, 44 and most deobscurer blocks 41, 42, 60, 61 but leaving a de-obscurer block 62 as output to Remote Decrypter Unit 2, as shown in figure 10. In this case executable program is always stored in plain form in registers bank 14 or stack 13.

The same consideration made for a virtual machine, also applies to a hardware machine. Such a machine will be named herein after enCrypted Registers Machine Unit (CRPU). Some differences are expected in this case.

The architecture presented in figure 10 is particularly indicated for hardware context: in this case stack is usually stored in volatile memory unit outside the machine. On the other hand a registers bank, if present, shall be resident inside the machine. Usually, but not always, machine registers banks are more difficult to be read by an external malicious entity, so in some cases, the hardware manufacturer can decide not to include the logic that obscures their contents, such as registers de-obscurers, registers obscured flags and so on. Anyway, this is not recommended since there are some means to read registers, depending on general machine architecture and programming model (an interrupt service routine -ISR- called at each main program's instruction execution, for example).

In a hardware implementation stack access instructions ("push"/"pop") should be designed to manage extra data that trace the state of obscuring of stack cells. For example, together with each word stored in stack, an extra bit shall be present that specifies if relevant word is obscured or not.

The present invention provides the virtual or harwdare machine 10 a decryption method to execute an executable program in encrypted format 7, stored in non volatile memory unit 1, the decryption method being applied at run-time. Advantageously, the executable program in encrypted format 7 can be always stored on non volatile memory 1 in secure manner and used in plain format only during the execution.

Run-time execution is made safer by obscuring the decrypted code, and de-obscuring it only when needed. The decryption is lightweight and the performance not to damaged thanks to a partially encryption of the plain executable code based on the encryption of only the operands 5 belonging to the plain executable program 4 in crypted operands 6.

## Claims

1. Virtual machine or hardware processor (10) for IC-Card portable electronic devices including a non volatile memory unit (1) **characterized by** comprising a remote decryption unit (2) and means (20, 40) for executing executable programs in crypted format (7).

2. Virtual machine or hardware processor according to claim 1 and further including means (41, 42, 43, 44, 60, 61) to perform obscuration of operands and de-obscuration of obscured operands (18).

3. Virtual machine or hardware processor according to claim 1, **characterized by** the fact that said means for executing executable program in crypted format (7) comprise an IC Card (19) storing a licence Key (8).

4. Virtual machine or hardware processor according to claim 1, **characterized by** the fact that said means for executing executable program in crypted format (7) comprise an IC Card Interface (20) for reading the IC Card (19) and for decrypting the executable program in crypted format (7) into plain executable program (4).

5. Virtual machine or hardware processor according to claim 4, **characterized by** the fact that said IC Card Interface (20) is structured to decrypt only a part of said executable program in crypted format (7) into a plain executable program (4).

6. Virtual machine or hardware processor according to claim 5, **characterized by** the fact that said IC Card Interface (20) is structured to decrypt only the operands (6) of said executable program in crypted format (7) into decrypted operands (5).

7. Virtual machine or hardware processor according to claim 1, **characterized by** the fact that, said remote decryption unit (2) detects if an instruction contains crypted operands crops (6) and enable a decryption (11) by the IC Card Interface (20) upon detection of one of said crops (6).

8. Virtual machine or hardware processor according to claim 1, **characterized by** the fact that, said IC Card Interface (20) decrypts crops (6) through the licence key (8) stored inside IC Card (19).

9. Virtual machine or hardware processor according to claim 1, **characterized by** the fact that a dynamic obscuration key (17) is periodically generated and stored both in the IC Card (19) and in said virtual machine or hardware processor (10).

10. Virtual machine or hardware processor according to claim 8 **characterized by** the fact that, said IC Card Interface (20) obscures said decrypted crops (6) into obscured operands (18) through said dynamic obscuration key (17).

11. Virtual machine or hardware processor according to claim 10, **characterized by** the fact that, said IC Card Interface (20) returns the obscured operands (18) to the remote decryption unit (2).

12. Virtual machine or hardware processor according to claim 10, **characterized by** the fact that, said obscured operand (18) are loaded inside stack (13) or register bank (14) and marked by obscurator flags (43, 44).

13. Virtual machine or hardware processor according to claim 12, **characterized by** the fact that, de-obscurator units (41, 42) perform a de-osbcuration operation on said obscured operands (18), through said dynamic obscuration key (17), before sending them to an arithmetic logic unit (ALU).

14. Virtual machine or hardware processor according to claim 12, **characterized by** the fact that, obscurator mechanism preserves the plain value of operators in a volatile memory.

15. Virtual machine or hardware processor according to claim 1, **characterized by** the fact that additional obscurator and de-obscurator units can be located in different position on the flow starting from the loading of the crypted operands crops (7) into remote decryption unit (2) till the processing of their corresponding plain value by the arithmetic logic unit (ALU).

16. Portable electronic system including an IC-Card; an electronic device comprising a virtual machine or a hardware processor (10) and a non volatile memory unit (1) in said electronic device; **characterized by** comprising:
- a remote decryption unit (2) in said electronic device;
- means (20, 40) for executing executable programs in crypted format (7); and,
- means (41, 42, 43, 44, 60, 61) to perform obscuration of operands and de-obscuration of obscured operands (18).

17. A system according to claim 16 **characterized by** the fact that said means for executing executable program in crypted format (7) comprise an IC Card Interface (20) for reading said IC Card (19) and for decrypting the executable program in crypted format (7) into plain executable program (4).
